# EUROPEAN PATENT APPLICATION

(11) **EP 2 284 635 A1**
(43) Date of publication of application: **16.02.2011**
(21) Application number: 09165697.5
(22) Date of filing: 16.07.2009
(51) Int. Cl.: G05D 1/02

(54) **Autonomously and independently controlling transport system**

(71) Applicant: Wissing, Søren, 6300 Zug (CH)
(72) Inventor: Wissing, Søren, 6300 Zug (CH)
(74) Representative: Nielsen, Henrik Sten

(57) **Abstract**

By the invention a transport system including a guideway and one or more wheeled vehicles is provided, the guideway having a number of position indicating elements defining a drive lane for the one or more vehicles, each of the one or more vehicles being steerable by a steering motor connected to one pair of wheels and further having a positioning detector cooperating with the position indicating elements for determining a first distance, a frontal distance detector for determining a second distance to a further vehicle on the guideway, a drive motor system, a brake system and a CPU communicating with the positioning detector and the steering motor for maintaining a lateral positioning, and further communicating with the distance detector, drive motor system and brake system for maintaining a distance to the further vehicle identical to or exceeding the second distance.

## Description

Through all times the need for transportation of people and goods has been prevalent in human culture, and the need has intensified as the world has become more globalized. Goods are produced at the locations where the best conditions for their manufacture are found and then transported to the markets where their sale will yield the highest profit. Also human resources in the form of employees often need to work in urbanized areas where the companies requiring their skill are situated, while not necessarily preferring to live close to their work as other locations may be more advantageous for them due to living costs, relatives, surroundings etc. Thus, these employees will need to travel considerable distances each day between their homes and the workplace. Also, non-work related travel presumes the availability of affordable and convenient means of transportation.

Transportation means commonly used in urbanized areas include vehicles for running on roads and streets, such as bicycles, cars and buses, and vehicles for running on tracks, such as trains, trams and subways. Another categorization divides the transportation means into public transportation, i.e. buses, trains, trams and subways, and personal transportation, i.e. bicycles and cars. Although the majority of all cars can carry passengers, cars are usually, at least in the context of transporting an employee from his home to work, only carrying the driver himself. Despite the costs of owning and running a car, it is often the preferred means of personal transportation even if bicycles are popular for short distances. The driver of a car has the freedom to decide where he wants to travel, at what time he wants to start his journey and importantly which company, if any, he wants to bring with him. In contrast, the public transportation systems require its users to adapt to specific routes, timetables and the occasional overcrowding and resultant lack of private space. However, the use of conventional cars powered by combustion engines does not come without a price in the form of pollution, congestion, traffic accidents and general depletion of fossil fuel reserves. One major aspect in this context is that the weight ratio between the mass moved to transport on person and the weight of that one person is typically 10:1, i.e. a 1000 kg car is used to transport a 100 kg person. The resulting waste of energy and accompanying unnecessary emissions are significant. Another aspect is the cost in insurance money for treating victims of traffic accidents and replacing damaged vehicles.

The problems associated with personal transport by cars appear complex and time-consuming to solve. The provision of improved public transport such as faster and more frequent trains and buses cannot completely ameliorate the situation as long as people prefer the privacy of personal transportation means. Likewise, the provision of more environmentally friendly propulsion systems for personal transportation means will not solve the problems of congestion in urbanized areas.

One proposed system for reducing the problems associated with personal transport by personal vehicles such as cars includes the provision of dedicated roadway systems and vehicles, which may be run both off the dedicated roadway and on it, and further receiving guidance or power or both when running on the dedicated roadway system. Such systems are described in amongst others US3363584, US4129203, EP0533364, EP1169684 and EP1341067

The techniques described in the above documents are unnecessarily complicated requiring centralized and/or inflexible traffic control, large alterations to existing infrastructure, or do not provide autonomously controlling vehicles.

An object of the present invention is to provide an autonomously and independently controlling transport system. The stationary parts of the transport system are modular, thus simple and cheap to manufacture and erect, enabling safe and efficient travel within the transport system. The vehicles may be of lightweight construction to increase the ratio between energy used for transporting people or goods end energy used to move the vehicles themselves.

A further advantage according to the present invention is that the vehicles are autonomously and independently controllable, i.e. no central traffic control system is needed. This increases safety as a central traffic control system, if malfunctioning or failing, could cause innumerable traffic accidents in a transportation system. It is therefore a further object of the present invention to provide a method for controlling a vehicle within the transport system of the first object of the invention.

A further advantage according to the present invention is that users of the transport system may travel in privacy in their own personal vehicles while being liberated from the burden of controlling the vehicle, thus allowing the users to spend their time during travel on different activities such as work or rest etc.

The above objects together with numerous other objects which will be evident from the below detailed description of preferred embodiments of the autonomously and independently controllable transport system of the present invention are according to a first aspect of the present invention obtained by a transport system including a guideway and one or more vehicles:
i) the guideway having
   a top surface for allowing said one or more vehicles to drive on the guideway,
   a number of position indicating elements positioned along the guideway and defining a drive lane on the top surface
ii) each of said one or more vehicles having
   a body,
   two pairs of rotatable wheels supported rotatably by the body,
   an electrical power source included in the body,
   a steering motor supported by the body, for steering one of the pair of wheels by the actuation of the steering motor through the supply of electrical power from the electrical power source to the steering motor,
   a positioning detector supported by the body and cooperating with the position indicating elements for determining a first distance from the vehicle to the position indicating elements,
   a distance detector positioned at the front end of the body and receiving electrical power from the electrical power source, for determining a second distance to an obstacle, in particular a further vehicle driving on the guideway,
   a drive motor system supported by the body and connected to at least one pair of the rotatable wheels constituting a pair of drive wheels for causing the vehicle to drive by supplying energy to the drive motor system,
   a brake system including a brake element located in or at each of said wheels of the two pair of wheels, and
   a CPU housed within the body, receiving electrical power from the electrical power source, and further communicating with the positioning detector, the distance detector and the steering motor and receiving information from the positioning detector for causing the actuation of the steering motor and generating, in case a deviation of the vehicle in relation to the drive lane is detected, a lateral repositioning of the vehicle in relation to the drive lane for maintaining the first distance from the vehicle to the position indicating elements and, receiving information from the distance detector for causing the interruption of the supply of energy to the drive motor system and/or causing actuation of the brake system for decelerating the vehicle and maintaining a distance to the further vehicle identical to or exceeding the second distance.

The top surface of the guideway may be coated with a friction enhancing material such as asphalt for increasing the maximum safe speed of vehicles driving on the guideway. Typically the guideway has a single lane, but a multi lane guideway may be preferable in some applications as multiple lanes allow a higher capacity. Preferably the guideway has a shoulder on each side of the road surface, but one or both shoulders may be omitted in certain applications, particularly where vehicles are to drive onto the guideway. The shoulder may serve to prevent vehicles from running off the guideway. The guideway may be placed directly on the ground which results in a simple and less expensive construction, or may be elevated over the ground to preserve existing buildings or roads along the guideway, or may be embedded into an excavation in the ground which may lessen the noise from vehicles driving on the guideway or run through a tunnel wherein existing subway tunnels may be converted into guideways. The guideway may be manufactured from conventional materials such as steel or concrete or constructed as an ordinary road with asphalt or paving stones on sand or gravel, but fibre reinforced plastic is preferred since fibre-reinforced plastic is light, allowing the construction of the guideway without using heavy lifting equipment. The guideway may also be constructed from a combination of materials. The guideway may include heating coils for electric heating or pipes for heating by pumping a hot fluid within the guideway to deice the top surface in wither conditions. The guideway may be constructed from a plurality of pre-fabricated guideway sections to simplify the construction. The guideway may include a railing or fence to prevent non-authorized access.

The position indicating element is placed along the guideway preferably at a constant lateral position in relation to the guideway. The position indicating element may be a continuous or semi continuous electric wire embedded in the top surface of the guideway, a continuous or semi continuous or dotted reflecting line painted on the top surface of the guideway or a shoulder of the guideway, a continuous reflecting surface provided on a shoulder of the guideway, a track embedded in the top surface of the guideway, discrete beacons (radio, infrared or sonar) provided along the top surface of the guideway or a shoulder of the guideway, continuous or dotted light sources provided along the top surface of the guideway or a shoulder of the guideway etc. Of the above a continuous reflecting surface provided on a shoulder of the guideway is preferred because the reflecting surface may be mounted within a slot or similar, thus being non-affected by weather conditions etc.

The vehicle may be operable only on the guideway, but is preferably also operable outside the guideway, i.e. on streets and roads not having a position indicating element, by a human driver using a steering wheel or joystick, an accelerator and a brake pedal. Thus the owner of a vehicle may drive from his residence to the nearest entrance to the guideway himself, and once entering the guideway allow the vehicle to be automatically controlled during travel along the guideway. The vehicle may also, when confined to the guideway, be operated without a human driver, such as a transit transport system at an airport or city center.
The vehicles may have load capacities of e.g. 2 to e g. 50 passengers and the fully loaded vehicle may weigh from e.g. 500 kg for a small two seater vehicle to e.g. 30000 kg or more for a freight vehicle.

The body of the vehicle may be constructed from steel, aluminum, fibre-reinforced plastic or a combination, but preferably light weight materials are used. The two pairs of rotatable wheels comprise road wheels made from aluminum, steel or fibre reinforced plastic shod with tires which are pneumatic or solid and made from rubber or plastic. The wheels may be further be mounted to wheel suspensions, the wheel suspensions being supported by the body. The electrical power supply is typically a battery.

The drive motor system preferably includes an electric motor since an electric motor has a low environmental impact, but may be an internal combustion engine such as a two-stroke or four-stroke diesel or gasoline powered engine. When the motor is an electric motor the energy source may be a battery or a fuel cell, or alternatively the energy may be provided by a conducting structure extending along the guideway, preferably combined with the position indicating element, and a pantograph for mechanically connecting the vehicle to the conducting structure. As an alternative, the conducting structure may include electrical coils or strips included within the guideway and corresponding coils or strips in the vehicle for receiving electrical energy by induction. When the vehicle receives energy provided by a conducting structure extending along the guideway, the capacity of the battery carried by the vehicle may be decreased which results in lighter vehicles and an increased ratio between the weight of persons or goods carried by the vehicle and the weight of the loaded vehicle.
The brake system may be hydraulic or pneumatic, or as a preferable alternative is regenerative generating electrical energy during braking.

The positioning detector may operate using mechanical, capacitive, magnetic, ultrasonic, radar or lidar distance measuring techniques, or may alternatively comprise receivers for receiving signals from discrete beacons identifiable by the receivers and used to compute distances trigonometrically.

The distance detector preferably uses radar or lidar distance measuring techniques to measure a second distance to the nearest object along the guideway Alternatively, each vehicle may be equipped with an identifiable transponder, whereby the distance detector may receive the transponder signal and calculate a distance from the transponder signal.

The CPU typically has a clock frequence of at least 1000 MHz, and may execute a base program for receiving information from the positioning detector for causing the actuation of the steering motor and generating, in case a deviation of the vehicle in relation to the drive lane is detected, a lateral repositioning of the vehicle in relation to the drive lane for maintaining the first distance from the vehicles to the position indicating elements and, receiving information from the distance detector for causing the interruption of the supply of energy to the drive motor system and/or causing actuation of the brake system for decelerating the vehicle and maintaining a distance to the further vehicle identical to or exceeding the second distance.

The vehicle may further include a car control system in which case the CPU sends requests to the car control system which then actuates the steering motor and/or causes the interruption of the supply of energy to the drive motor system and/or actuation of the brake system. When the vehicle includes a steering wheel or joystick, an accelerator and a brake pedal, a human driver may operate the vehicle manually whereby the signals from the steering wheel or joystick, accelerator and brake pedal are forwarded directly to the car control system.

The position device may be a GPS receiver, an inertial navigation system or driven distance on the guideway supplied through dead reckoning by the car control.

The vehicle may further include a drive lane mapping device comprising condition triggered instructions deliverable to the CPU for use in controlling the vehicle. The possible instructions deliverable to the CPU may include instructions to modify set values, for example the minimum allowable distance to vehicle in front, which are used by the CPU for controlling the vehicle. Other instructions may cause the CPU to stop the vehicle etc. The instructions in the drive lane mapping device may be triggered by a number of types of signals or data such as position data (an instruction is triggered and delivered to the CPU when the vehicle reaches a certain position on the guideway), velocity data (an instruction is triggered and delivered to the CPU when the vehicle reaches a specific velocity), environmental data (an instruction is triggered when the vehicles encounters a specific environment), vehicle data (an instruction is triggered when the vehicle has a specific condition), driver data (an instruction is triggered based on the condition of the driver of the vehicle ), or external instructions data (an instruction is triggered from an outside source). To provide signals for use in triggering instructions in the drive lane mapping device, the vehicle preferably includes a GPS receiver to provide position data and a radio receiver to provide external instruction data to the drive lane mapping device. Further sensors such as sensors indicating the condition of human driver may also be included.

The vehicle may also include further distance sensors similar to the first or second sensors, the additional distance sensors being provided along the perimeter of the vehicle or at the rear. The additional sensors may also be used for triggering instructions in the drive lane mapping device, for example instructions relating to lane changes on a multi lane guideway.

A second aspect of the present invention provides a method of driving a vehicle on a guideway comprising the steps of:
i) providing said guideway having
   a top surface for allowing said said vehicle to drive on said guideway,
   a number of position indicating elements positioned along said guideway and defining a drive lane on said top surface
ii) providing said vehicles having
   a body,
   two pairs of rotatable wheels supported rotatably by said body,
   an electrical power source included in said body,
   a steering motor supported by said body, for steering one of said pair of wheels by the actuation of said steering motor through the supply of electrical power from said electrical power source to said steering motor,
   a positioning detector supported by said body and cooperating with said position indicating elements for determining a first distance from said vehicle to said position indicating elements,
   a distance detector positioned at the front end of said body and receiving electrical power from said electrical power source, for determining a second distance to an obstacle, in particular a further vehicle driving on said guideway,
   a drive motor system supported by said body and connected to at least one pair of said rotatable wheels constituting a pair of drive wheels for causing said vehicle to drive by supplying energy to said drive motor system,
   a brake system including a brake element located in or at each of said wheels of said two pair of wheels, and
   a CPU housed within said body, receiving electrical power from said electrical power source, and further communicating with said positioning detector,
receiving information from said positioning detector and communicating said information to said CPU,
causing the actuation of said steering motor controlled by said CPU in case a deviation of said vehicle in relation to said drive lane is detected by a lateral repositioning of said vehicle in relation to said drive lane for maintaining said first distance from said vehicle to said position indicating elements and
receiving information from said distance detector and communicating said information to said CPU,
causing the interruption of the supply of energy to said drive motor system and/or causing actuation of said brake system controlled by said CPU for decelerating said vehicle and maintaining a distance to said further vehicle identical to or exceeding said second distance.

A third aspect of the present invention provides a vehicle for use in the transport system according to the first aspect of the present invention and/or for use in the method according to second aspect of the present invention, said vehicle having:
a body,
two pairs of rotatable wheels supported rotatably by said body,
an electrical power source included in said body,
a steering motor supported by said body, for steering one of said pair of wheels by the actuation of said steering motor through the supply of electrical power from said electrical power source to said steering motor,
a positioning detector supported by said body and cooperating with said position indicating elements for determining a first distance from said vehicle to said position indicating elements,
a distance detector positioned at the front end of said body and receiving electrical power from said electrical power source, for determining a second distance to an obstacle, in particular a further vehicle driving on said guideway,
a drive motor system supported by said body and connected to at least one pair of said rotatable wheels constituting a pair of drive wheels for causing said vehicle to drive by supplying energy to said drive motor system,
a brake system including a brake element located in or at each of said wheels of said two pair of wheels, and
a CPU housed within said body, receiving electrical power from said electrical power source, and further communicating with said positioning detector, said distance detector and said steering motor and receiving information from said positioning detector for causing the actuation of said steering motor and generating, in case a deviation of said vehicle in relation to said drive lane is detected, a lateral repositioning of said vehicle in relation to said drive lane for maintaining said first distance from said vehicle to said position indicating elements and, receiving information from said distance detector for causing the interruption of the supply of energy to said drive motor system and/or causing actuation of said brake system for decelerating said vehicle and maintaining a distance to said further vehicle identical to or exceeding said second distance.

The invention and its many advantages will be described in more detail below with reference to the accompanying schematic drawings, which for the purpose of illustration show some non-limiting embodiments and in which
Fig. 1 shows a guideway with a power and control rail and vehicles according to one embodiment of the present invention.
Fig. 2 shows in cross section the guideway and power and control rail of fig. 1 together with a vehicle.
Fig. 3 shows in cross section the guideway and power and control rail of fig. 1 together with an alternative embodiment of a vehicle.
Fig. 4A-4D show an embodiment of connecting a vehicle to the power and controls rail for driving on the guideway.
Fig. 5A-4D show an embodiment of connecting an alternative embodiment of a vehicle to the power and control rail for driving on the guideway.
Fig. 6A-6D show different embodiments for providing the power and control rail in relation to the guideway.
Fig. 6E-6G show an embodiment of a transport system according to the present invention where a non-powered control rail is provided in relation to a guideway.
Fig. 7A shows the control and propulsion system for a vehicle driving on the guideway of figs. 1-5 and figs. 6A-6D.
Fig. 7B shows the control and propulsion system for a vehicle driving on the guideway of figs. 6E-6G.
Fig. 8 shows a modular guideway and modular power and control rail elevated by pillars according to one embodiment of the present invention.
Fig. 9 shows a transport system junction according to one embodiment of the transport system of the present invention.

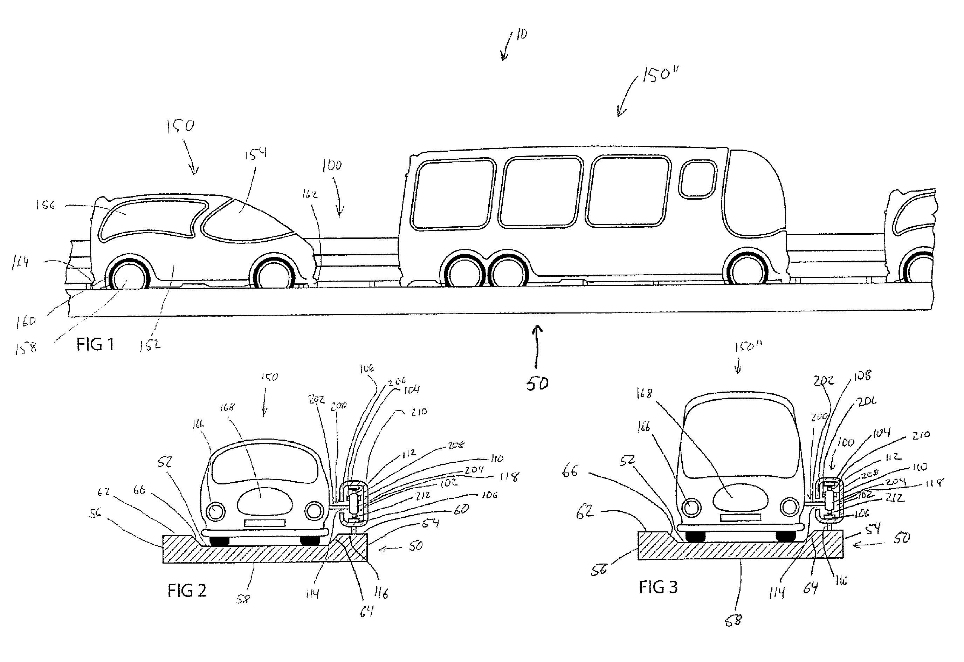

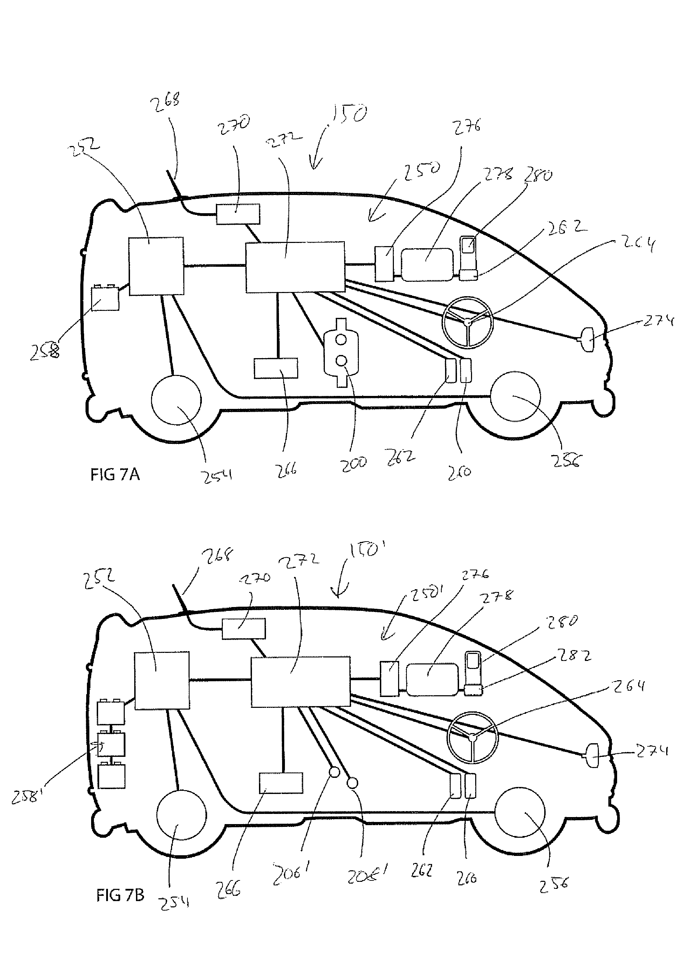

Fig. 1 shows vehicle 150 and vehicle 150' traveling along the guideway 50 while connected to power and control rail 100 in a transport system in its entirety designated the reference numeral 10 according to one embodiment of the present invention Basically the power and control rail 100 serves three purposes, firstly to supply power or electric energy to the vehicles, secondly to position the vehicles relative to the guideway, and thirdly to provide safety to the vehicles and the individuals driving the vehicles. The vehicle 150 is intended for the transport of 2-6 persons or similar loads of goods within the transport system 10. The vehicle 150 comprises a monocoque body 152 which provides the structural rigidity needed for the mounting of wheel suspensions, propulsion systems and components of the driver and passenger compartment. The body 152 is advantageously constructed of light composite material such as fibre (glass, carbon, aramide, etc) reinforced plastics, but may also be constructed of lightweight metals such as aluminum. The weight of the vehicle 150 should preferably be less than 700 kg when unloaded, but is preferably between e.g. 300 kg and e.g. 500 kg in order to obtain a high ratio of load carried by the vehicle 150 to the total weight of the vehicle 150 and the load. Integrated into the body 152 is a windshield 154 and two side windows, one of which is designated the reference numeral 156. A rear window (not shown) is also integrated into the body 152, allowing the driver a rear view. The windows are preferably made from acrylic glass and typically bonded to the body 152, but for example the windshield 154 may be hingedly mounted to the body 152 as one way of entering and exiting the vehicle 150. Wheel suspensions (not shown) mount road wheels, one of which is designated the reference numeral 158, which are typically made from aluminum or fibre reinforced plastic and are shod with tires, one of which is designated the reference numeral 160. The tire 160 is typically a pneumatic tire made from rubber or plastic, but may also be of solid construction. The road wheel 158 and the tire 168 are suitable both for travelling along the guideway 50 of the transport system 10, and for travelling on ordinary streets and roads as is known in the context of cars powered by internal combustion engines. The vehicle 150 further comprises front bumper 162 and rear bumper 164 for absorbing impact damage should the vehicle 150 hit another vehicle or a stationary object. As shown in fig 2, the vehicle 150 further comprises two headlights, one of which is designated the reference numeral 160, and a front sensor area 168, which will be described in greater detail, together with the propulsion and control system of the vehicle 150, in fig. 7A and 7B.

Referring to figs. 1, 2 and 3 it can be appreciated that the vehicle 150" is an alternative embodiment of the vehicle 15a and that the vehicle 150" in all structural aspects is similar to the vehicle 150, the sole difference being a larger body and a three-axle arrangement for achieving an intended use of transporting up to 24 passengers or the equivalent load of goods.

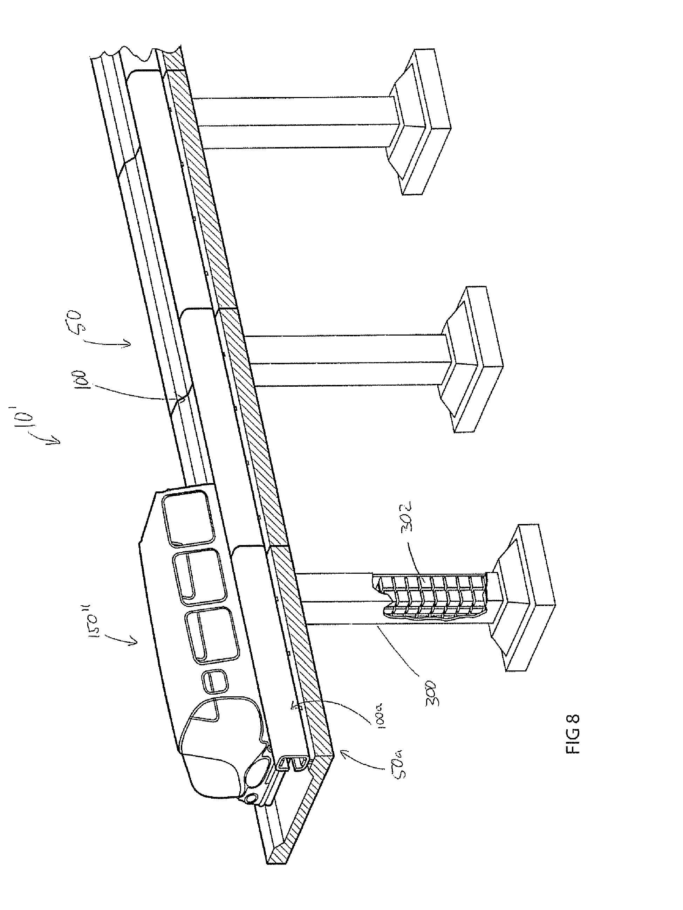

Referring to fig. 2 the guideway 50 will now be described in detail. The guideway 50 may be placed directly on the ground, or may in other embodiments, one of which is shown in fig. 8, be elevated over the ground. Other embodiments include embedding the guideway 50 into an excavation in the ground in a subterranean tunnel. Suitable materials for construction of the guideway 50 include steel and concrete but fibre reinforced plastic is preferred. The guideway 50 further comprises top a surface 52 for supporting and offering traction to the vehicle 150 running along the guideway 50 The top surface 52 may be coated with friction materials to increase the friction between the tires 160 and the top surface 52 to allow higher speeds to be reached with the transport system 10. Furthermore, the guideway 50 may include heating means (not shown) arranged within the guideway 50 close to the top surface 52 to de-ice the top surface 52 in winter conditions Guideway 50 further has a first side 54 and a second side 56 which form part of first and second shoulders 60 and 62 which extend above top surface 52. First and second bevel 64 and 66 provide the transition between the shoulders 60, 62 and the top surface 52. The second shoulder 62 may facilitate the entry and exit of vehicle 150 while the first shoulder 60 supports the power and control rail 100. The shoulders 60 and 62 may also support a railing or fence to prevent non-authorized access, such railings or fences may also be mounted to the sides 54 and 56.

Fig. 2 and 3 further shows a pantograph 200 which is attached to one side of the vehicle 150 the power and control rail 100 which will now be described in more detail.

The pantograph 200 includes an arm 202 extending from one side of the vehicle 150 and being equipped with a body 204 at its distal end. The arm 202 may be jointed, telescopic or alternatively hingedly connected to the vehicle 150 for stowing the body 204 during travel outside the transport system 10. The arm 202 may be mounted in any position along the side of the vehicle 150. The body 204 is rotatably mounted on the arm 202 and includes proximal and distal distance sensors 206 and 208 respectively, and first and second contacts 210 and 212 respectively. The distance sensors 206 and 208 may operate using mechanical, capacitive, magnetic, ultrasonic, radar or lidar distance measuring techniques as are well known in the art, and may further have the capability of reading sign or bar codes or magnetic information carriers included in the power and control rail 100. The first and second contacts 210 and 212 may include spring-loaded contact shoes, or alternatively spring-loaded metallic wheels or ball bearings.

The power and control rail 100 includes an enclosure 112 which is preferably constructed out of a non-conducting material, typically plastic or fibre reinforced plastic. The enclosure 112 is supported by the first shoulder 60 through strut 116, or may be mounted directly to the first shoulder 60 or as alternative be constructed as an integral part of the guideway 50. The enclosure 112 is open to the exterior through slit 114, the slit 114 together with the enclosure 112 forming a slot 102 for receiving the body 204. The power and control rail 100 further comprises a first and second electric strip 104 and 106, proximal and distal control surfaces 108 and 110 and an inner wall 118.

Electric power is supplied from the power and control rail 100 to the vehicle 150 for energizing the drive motors and also for charging batteries included within the vehicle 150 as will be described in more detail below in relation to fig. 7A.

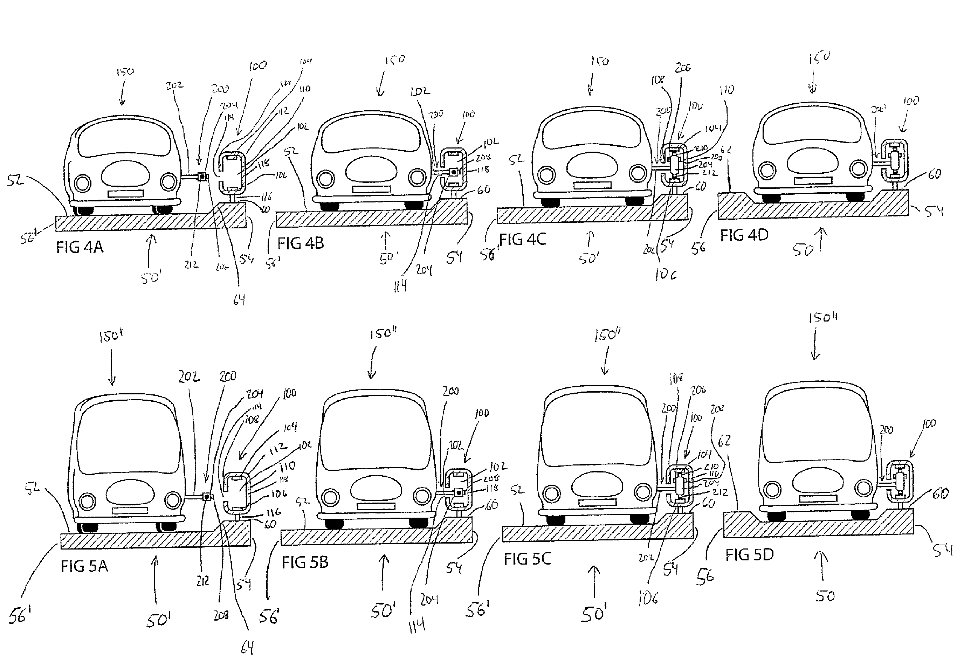

The interaction of the pantograph 200 with the power and control rail 100 will now be described in more detail in relation to figs. 4A-4D.

Fig. 4A shows the vehicle 150 performing a lateral movement for connecting the pantograph 200 to the power and control rail 100. During the maneuver the vehicle 150 is manually controlled by a human driver and powered by an internal power source which will be discussed in more detail in relation to fig. 7A. Since the guideway 50 includes the first and second shoulders 60 and 62 as previously shown, a guideway ramp 50' must be provided during the procedure of connecting the pantograph 200 to the power and control rail section 100. As shown in fig. 4A the guideway ramp 50' includes the side 54 forming the first shoulder 60, while a second side 56' is provided which is of the same height as the thickness of the top surface 52. Thus, the guideway ramp 50', while including the first shoulder 60 and the first bevel 64, does not include the second bevel 66 (as shown in figs. 2-3), thereby allowing lateral movement of the vehicle 150. The guideway ramp 50' may be constructed alongside an ordinary road or street, allowing entry of vehicle 150 through a lateral movement onto the guideway ramp section 150' from the ordinary road or street. The vehicle 150 carries the pantograph 200 for connecting to power and control rail 100.

In fig. 4A the body 204 is shown rotated 90 degrees around the axis of the arm 202, thus allowing the body 204 to be inserted into the slot 102 through the slit 114.

In fig. 4B the body 204 has been inserted into the slot 102 through the lateral movement towards the power and control rail 100 of the vehicle 150 as manually controlled by the human driver. During the insertion of the body 204 into the slot 102, the distal distance sensor 208 may continuously measure the distance to the inner wall 118 of the slot 102. To prevent over-insertion of the body 204, the measured distance signal provided by the distal distance sensor 208 is used to take control over the steering of the vehicle 150, thereby preventing vehicle 150 from coming closer to the power and control rail 100. At this point in the connection procedure it may still be possible for the human driver of the vehicle 150 to abort the connection procedure by turning the steering wheel and performing a lateral movement away from the power and control rail 100 since the body 204 has not yet been connected to the power and control rail 100. To proceed with the connection procedure the driver may either instruct the vehicle 150 establish connection to the power and control rail 100, or the connection procedure may automatically proceed, both scenarios being described in more detail with reference to figs. 7A and 7B. To continue and finalize the connection of the vehicle 150 to the power and control rail 100 by the pantograph 200, the body 204 is rotated an angle of 90 degrees around the axis of the arm 202 as shown in fig 4C, thereby establishing electrical contact between the first contact 210 and the first electric strip 104, and analogously between the second contact 212 and the second electric contact 100. Thus connected, electric energy may be delivered from the power and control rail 100 to the body 204 and further carried by the arm 202, either by the arm 202 itself in which case the arm 202 should be constructed from materials having high electric conductivity and further include at least two electrical pathways for electrical energy delivered and a return path or ground, or by wires carried in or on the arm 202.

As seen in fig. 4C, the proximal distance sensor 206 and the distal distance sensor 208 are also brought into measuring distance with the proximal control surface 108 and the distal control surface 110 through rotation of the body 204 The use of the two distance sensors 206 and 208 increases the accuracy of the distance measurements and provides one way of changing guideways as will be described further in relation to fig 7A-7B, but it is contemplated that only one of the distance sensors 206 and 208 may be used in transport systems where changing of guideways is performed by the human driver instead of automatically. Furthermore, fig. 4C shows the vehicle 150 running along the guideway ramp 50' which may either lead the vehicle 150 onto the guideway 50 through a guideway switch, or may alternatively merge into the guideway 50 through adding the second shoulder 62 to guideway ramp 50' as shown in fig. 4D.

In fig. 4D, the vehicle 150 passed from the guideway ramp 50' onto guideway 50, travelling along the guideway 50 until reaching a desired destination or until the human driver wishes to leave the guideway 50. If the driver whishes to leave the guideway 50, he may only do this when running on the guideway ramp 50' The connection procedure described in figs. 4A-4C may then be reversed, essentially by rotating the body 204 around the axis of the arm 202 to enable the body 204 to be withdrawn out of the slot 102, thus allowing the driver to disconnect the vehicle 150 from the power and control rail 100. For security reasons, an alert may be shown to the driver with an optional audible signal before the disconnection procedure is initiated to alert the driver that he must shortly assume control and responsibility of the vehicle 150 Further rules for disconnecting from and connecting to the power and control rail 100 may apply, and will be described in more detail in relation to figs. 7A-7B.

Figs. 5A-5D show the same procedure as figs. 4A-4D, the sole difference being that the vehicle 150" is shown instead of the vehicle 150.

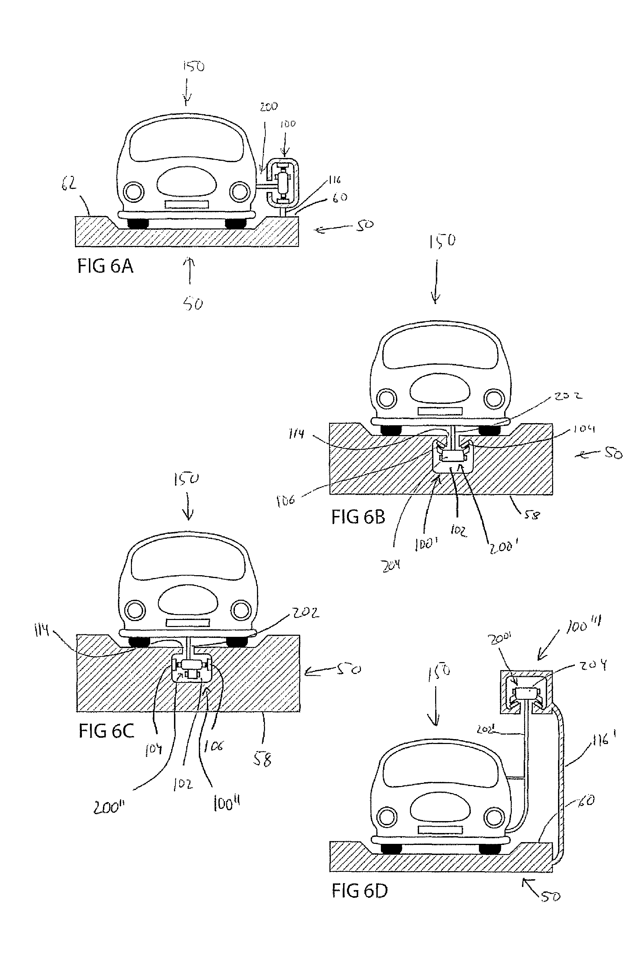

The power and control rail 100 may be provided in a variety of positions in relation to the guideway 50. Fig. 6A shows positioning of the power and control rail 100 supported on the strut 116 on one side of the guideway 50 for laterally engaging the body 200 as shown in figs. 1-5. By providing the power and control rail 100 on one side of the guideway 50 an especially simple connection procedure may be realized as described in relation to figs. 4 and 5 where it is also described that the power and control rail 100 may be mounted directly on the shoulder 60 or 62, or as an alternative may be constructed as an integral part of the guideway 50,

Another embodiment of providing a control and power rail in relation to a guideway is shown in fig. 6B where an alternative power and control rail 100' is formed within the guideway 50. A pantograph 200' is vertically extended from the underside of the vehicle 150 and connected to the power and control rail 100'. The power and control rail 100' has all the features of the power and control rail 100 except that the separate enclosure 112 is not required as the power and control rail 100' is enclosed by the material of the guideway 50. The pantograph 200' has all the features of the pantograph 200 and connection and disconnection of the pantograph 200' to the power and control rail 100' is performed through rotation of the body 204 around the axis of the arm 202 of the pantograph 200' as has been described in relation to figs 4-5. The slot 102 of the power and control rail 100' may have channels for draining water, snow or other debris which has entered the slot 102 through the slit 114, or may alternatively be deepened towards the bottom 58 of the guideway 50, effectively causing the guideway 50 to be divided into two parts. In fig. 6B the electric strips 104 and 106 have been repositioned to the inner walls of the slot 102 closest to the slit 114.

Another embodiment of providing a control and power rail in relation to a guideway is shown in fig. 6C where an alternative power and control rail 100" is formed within guideway 50. A pantograph 200" is vertically extended from the underside of the vehicle 150 and connected to the power and control rail 100". The power and control rail 100' has all the features of the power and control rail 100 except that the separate enclosure 112 is not required as the power and control rail 100" is enclosed by the material of the guideway 50. The pantograph 200" has all the features of the pantograph 200 and connection and disconnection of the pantograph 200" to the power and control rail 100" is performed through rotation of the body 204 around the axis of the arm 202 of the pantograph 200" as has been described in relation to figs. 4-5. The slot 102 of the power and control rail 100" may have channels for draining water, snow or other debris which has entered the slot 102 through the slit 114, or may alternatively be deepened towards the bottom 58 of the guideway 50, effectively causing the guideway 50 to be divided into two parts. In fig. 6C the electric strips 104 and 106 are positioned on the inner walls of the slot 102

The embodiments of fig. 6B and 6C may simplify the process of changing guideways when two or more guideways cross as compared to the embodiment shown in fig. 6A A further embodiment of providing a control and power rail in relation to a guideway is shown in fig. 6D where an alternative power and control rail 100'" is mounted in an elevated position above the first shoulder 60 of the guideway 50 supported by an elongated alternative strut 116' mounted to the first side 54 of the guideway 50. The pantograph 200' is vertically extended upwardly from an elongated arm 202' mounted to the side of the vehicle 150 and connected to the power and control rail 100'". The power and control rail 100"' has all the features of the power and control rail 100 The pantograph 200' has all the features of the pantograph 200 and connection and disconnection of the pantograph 200' to the power and control rail 100''' is performed through rotation of the body 204 around the axis of the arm 202' of the pantograph 200' as has been described in relation to figs. 4-5. By the embodiment shown in fig. 6C any risk of foreign or unwanted material, such as debris, rain or snow, entering the power and control rail 100"' is essentially eliminated while at the same time an increased level of safety is achieved as the risk of a worker or user of the transport system 10 accidentally coming in contact with the power and control rail 100"' is reduced.

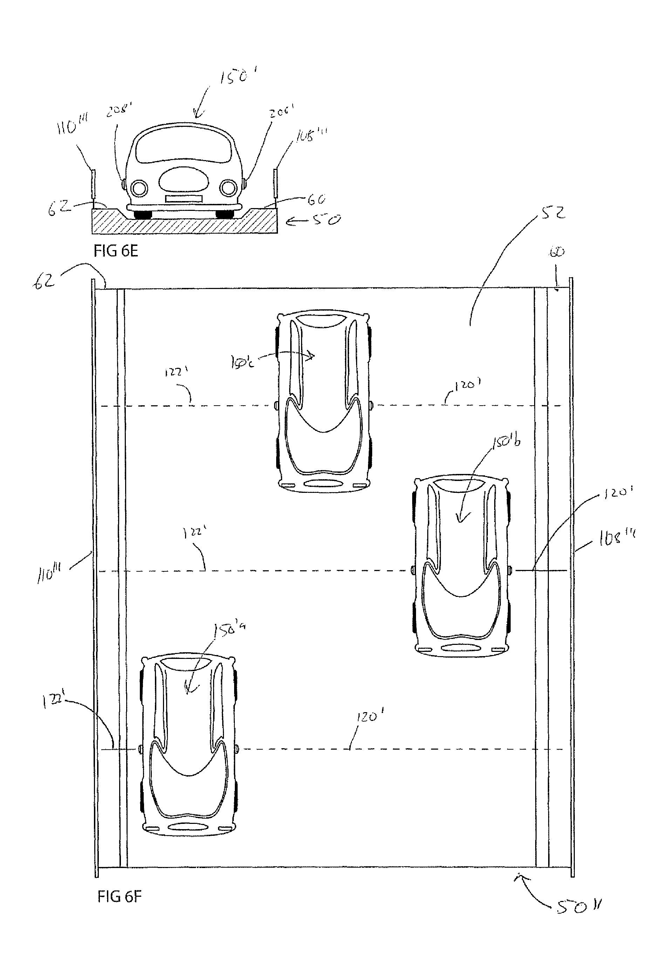

Yet a further embodiment where dual control rails are provided instead of one power and control rail in relation to a guideway is shown in fig. 6E. Here, a first control rail 108"' and a second control rail 110"' are provided along the shoulders 60 and 62 of the guideway 50. The control rails 108"' and 110'" may be provided as continuous rails or barriers along the shoulders 60 and 62 of the guideway 50, or may alternatively each be segmented and provided as discrete sections of control rail or as control units mounted along the guideway 50. A vehicle 150' is equipped with first and second distance sensors 206' and 208' for continuously measuring the distance to the control rails 108"' and 110"'. Since no power is supplied to the vehicle 150' by any mechanical connection, the vehicle 150' is typically powered by internal power supply only. It is however contemplated within the context of the present invention that power could be supplied to the vehicle 150' through induction from electrical coils or strips included within the guideway 50 and corresponding coils or strips in vehicle 150' as is known in the art.

Fig. 6F shows an overhead view of a section of alternative guideway 50" bordered by the control rails 108"' and 110"' provided on the shoulders 60 and 62. The guideway 50" has all the features of the guideway 50 except that the width of the top surface 52 is increased to accommodate three lanes. Each vehicle 150'^{a}, 150'^{b} and 150'^{c} automatically maintains its lateral position during travel along the guideway 50" by control and propulsion system 250' which will be described in more detail in relation to figs. 7A-7B. A control and propulsion system 250' uses the first distance sensor 206' to measure a first distance 120' to the first control rail 108', and the second distance sensor 208' to measure a second distance 122' to the second control rail 110'''. Depending on the distances 120' and 122', i.e. the lateral position of each vehicle, only one of the distances 120' and 122' may be used for controlling and maintaining the lateral position of the vehicle 150'. Thus the vehicle 150'^{a} may be controlled to maintain its lateral position solely by measuring the second distance 122' (solid line) and the vehicle 150'^{b} may be controlled by measuring the first distance 120' solid line, however, both the vehicles 150'^{a} and 150'^{b} preferably also monitor the other distances, i.e. the first distance 120' (dashed line) for the vehicle 150'^{a} and the second distance 122' for the vehicle 150'^{b}. The other distances may be used as a control of the distance used for controlling the vehicle, and may also be used for detecting vehicles in adjacent lanes.
Vehicle 150'^{c} on the other hand uses both the distances 120' and 122' since its position in the middle of the guideway 50" may result in a lower accuracy of the distance measurements.
On the guideway 50", a human driver of any of the vehicles 150'^{a}, 150'^{b} or 150'^{c} may initiate a change of lane, provided that the current lateral position of the vehicle on the guideway 50" is such that the lane change can be allowed by control and propulsion system 250'. The lane change may be allowed when distance data shows that there is a sufficient lateral distance available, i.e. there is at least on free lane, for the lane change.
The guideway 50" requires no special ramp to enter since the human driver may drive the vehicle 150' manually into one of the lanes prior to relinquishing control of vehicle 150' to control and propulsion system 250' as further described in relation to figs. 7A-7B.

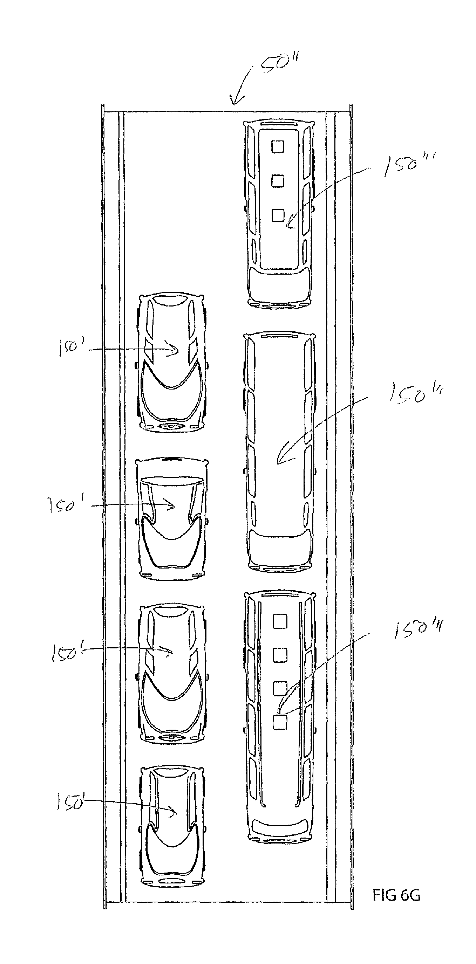

Fig. 6G shows the four vehicles 150' and three vehicles 150'" driving along guideway 50" with a reduced front to end distance between the vehicles, to reduce air resistance and energy consumption.

Fig. 7A shows the control and propulsion system 250 of the vehicle 150, the main components being car control 252 and CPU 272. The car control 252 receives instructions from the CPU 272 and controls rotational speed of rear hub motors 254, one of which is fitted to each rear wheel, and front hub motors 256, one of which is fitted to each front wheel, and further controls the steering angle of the front hub motors 256 to steer the vehicle 150. A steering wheel 264, an accelerator pedal 260 and a brake pedal 262 are provided as a part of the control and propulsion system 250, allowing the human driver to manually control the vehicle 150. Commands from the steering wheel 264, the accelerator pedal 260 and the brake pedal 262 are during manual control routed through the CPU 272 to the car control 252 which then adjusts the steering angle, increases the rotational speed of the hub motors 254 and 256, or decreases the rotational speed of the hub motors 254 and 256. Braking of vehicle the 150 may be provided by disc-brakes (not shown), drum-brakes (not shown), or by using the hub motors 254 and 256 as generators whereby kinetic energy from the braking procedure may be converted to electricity for store in battery 258 or redistributed to the power and control rail 100 (shown in figs. 1-5). The battery 258 stores electric energy sufficient for short distances such as from e.g. 5 km to e.g. 20 km or possibly longer such as from e.g. 20 km to e.g. 50 km, for example local trips and travel between a residence and the nearest guideway ramp 50' (shown in figs. 4-5), and is charged whenever the vehicle 150 is connected to power and control rail 100 (shown in figs 1-5).

During travel along the guideway 50 (shown in figs. 1-5), automatic steering and accelerating/deceleration of the vehicle 150 is controlled by the car control 252 receiving instructions from the CPU 272 instead of signals from the steering wheel 264, the accelerator pedal 260 and the brake pedal 262. The CPU 272 continuously assesses the situation of the vehicle 150 using a number of sensors and signals. The CPU 272 compares the measurement signals from the distance sensors 206 and 208 on pantograph 200, said measurement signals being indicative of the distances from the distance sensors 206 and 208 to the control surfaces 108 and 110 (shown in figs. 1-5), and instructs the car control 252 to adjust the steering angle of the front hub motors 256 if the comparison shows that the distance sensors 206 and 208 are not precisely positioned between the control surfaces 108 and 110. The pantograph 200 as briefly discussed above serves to take up electric power from the power and control rail 100 (shown in figs. 1-5) for the overall supply of energy for the control and propulsion system 250 e.g. the electronic components, the drive motors and the battery.

For controlling the rotational speed of the hub motors 254 and 256 and avoiding collisions with other vehicles further down the guideway 50, distance measurement signals are also received by the CPU 272 from distance sensor 274 mounted within the front sensor area 168 (shown in figs. 2-3), thus indicating whether there are any obstacles in front of the vehicle.
The distance sensor 274 typically operates using radar or lidar distance measuring techniques as are well known in the art.

Feedback signals from the car control 252 indicative of the current steering angle and speed may be supplied to the CPU 272 and used for calculating the optimum change in steering angle based on known understeer/oversteer characteristics of the vehicle 150.

Further signals to the CPU 272 are received from drive lane mapping device 266. The drive lane mapping device 266 includes specific instructions for procedures and requirements to be carried out or fulfilled by the CPU 272 during travel along the guideway 50. The instructions in the drive lane mapping device 266 may be triggered by position data, velocity data, environmental data, vehicle data, driver data, or external instructions data. Position data and Velocity data may be supplied by GPS (Global Positioning System) receiver 270, an inertial navigation system (not shown), travelled distance along the guideway 50 supplied through dead reckoning by the car control 252, or location indicating data markers placed along the guideway 50 or within the power and control rail 100 and read by the distance sensors 206 and 208 or by other sensors. Environmental data such as temperature, relative humidity, light conditions, rain or snowfall may be provided by other sensors (not shown). Vehicle data such as speed, tire pressure, acceleration, deceleration, vehicle load, vehicle weight, vehicle type, vehicle malfunction or mileage may be supplied by various sensors (not shown), the car control 252 or the CPU 272. Driver data such as driver alertness, driver consciousness, driver medical condition, driver identification, and driver behavior or driver emergency condition may be supplied by various sensors or by the CPU 272. Also, external instructions data such as updated software for the drive lane mapping device 266, stop data, temporary speed limit data, separation distance data or rerouting data may be received by radio antenna 268 or by data markers placed along the guideway 50 or within the power and control rail 100 and read by the distance sensors 206 and 208 or by other sensors.

When an instruction in the drive lane mapping device 266 has been triggered, the instruction is sent to the CPU 272 which begins to control the vehicle 150 according to the instruction. More than one instruction may be triggered or active at any moment, thus each instruction is ranked by a priority value A wide variety of instruction may be included in drive lane mapping device 266. Instructions that are triggered by position data and/or velocity data may include speed limitations (typically triggered when the vehicle 150 enters a guideway ramp or approaches a sharp turn), switching instructions (typically triggered when the vehicle 150 approaches a section of the the guideway 50 where a switch to another guideway should be performed in order to reach a destination), connection/disconnection instructions (typically triggered as the vehicle 150 enters the guideway 150 from the guideway ramp 150' (shown in figs. 4-5), the instruction prohibiting disconnection while travelling along the guideway 150), road information instructions (typically triggered when the vehicle 150 switches from one guideway to another) etc Instructions that are triggered by environmental data may include speed limitations (typically triggered if the temperature falls below 0 degrees C or during rain), instructions to turn on headlights or fog lights (triggered by light conditions), etc. Instructions triggered by vehicle data may include speed limitations (triggered by speeding when under human control, low tire pressure, overloaded vehicle, vehicle type), switching instructions to stop or leave the guideway 50 (triggered by overloaded vehicle or vehicle malfunction) etc. Instructions that are triggered by driver data may include emergency switching instructions for reaching the nearest healthcare facility (typically triggered by driver not conscious, driver medical condition, driver behavior), instructions for alerting the authorities (may be triggered by driver identification or driver medical condition), instructions for limiting manual control of the vehicle 150 (typically triggered by driver alertness or driver behavior) etc. Instructions that are triggered by external data instructions data may include speed limitations and/or lane restrictions (triggered by radio signals at a location where maintenance on the guideway 50 is performed), instructions to stop the vehicle 150 (typically triggered by radio signals at the site of an accident), instructions to decrease separation distance between subsequent vehicles travelling along guideway 50 (typically triggered by a radio signal to increase throughput of vehicles during rush hour), instructions to stop the vehicle 150 while an important update to the drive lane mapping device 266 or the CPU 272 is performed (triggered by a radio signal indicating that new software is available) etc.

The CPU 272 may also receive signals from the accelerator 260, the brake pedal 202 and the steering wheel 264, which signals, depending on the currently triggered instructions from the drive lane mapping device 266, may override the signals sent from the CPU 272 to the car control 252, thus allowing the human driver to perform certain maneuvers such as disconnection from the power and control rail 100 at the guideway ramp 50', increasing speed, braking, etc In one embodiment signals from the steering wheel 264 may be used during the connection procedure as described in relation to figs. 4A-4C. By turning and keeping turned the steering wheel 264 the human driver of the vehicle 150 indicates that he wishes to connect to the power and control rail 100. When the CPU 272 receives signals indicating that that the distance between the distal distance sensor 208 and the inner wall 118 of the power and control rail 100 reaches a specified value corresponding to a suitable insertion depth of the body 204 into slot 102, signals are sent to the car control 252 to adjust the steering angle of the front hub motors 256 so that the vehicle 150 moves no closer to the power and control rail 100, even though the driver keeps the steering wheel 264 turned, however the signal reaching the CPU 272 from the steering wheel 264 may serve as a confirmation signal from the driver of the vehicle 150 that he indeed wishes to connect to the power and control rail 100. The opposite procedure may be applied when the driver wishes to disconnect the vehicle 150 from the power and control rail 100, i.e. the driver should keep the steering wheel 264 turned as if he intended to move away from the power and control rail 100, the signal from the steering wheel 264 reaching the CPU 272, which upon confirming that the current triggered instructions from the drive lane mapping device 266 allows disconnection would initiate the disconnection procedure.

The control and propulsion system 250 may automatically without intervention by the driver control the vehicle 150 during travel along the guideway 150 towards a selected destination. The driver may use a mobile phone 280 or other device containing address information to the selected destination. The mobile phone 280 may be inserted in docking station 282, or alternatively an equivalent communication link may be established by the docking station 282 and the mobile phone 280 through wireless connection such as a Bluetooth connection, a WLAN connection etc. the selected address information is extracted from the mobile phone 280, or alternatively all available addresses may be extracted from the mobile phone 280 and shown on touch screen 278. After a destination has been chosen, the address information is converted to a sequence of navigational instructions by CPU I/O converter 276. During travel towards the destination, the navigational instructions are sequentially fed to the drive lane mapping device 266 by the CPU 272, thus triggering instructions stored in the drive lane mapping device 266 which when delivered to the CPU 272 results in commands for the car control 252 causing the vehicle 150 to travel towards the destination.
The instructions in the drive lane mapping device 266 may also include instruction to only use one of the distances measured by the distance sensors 206 and 208 for switching, i e. by only using one of the distances the vehicle 150 may be controlled to follow a specific power and control rail which branches of from another power and control rail.

Fig. 7B shows control and propulsion system 250' of the vehicle 150' which has all features of the power and control system 250 except that the distance sensors 206' and 208" are included instead of the pantograph 200, and that a battery 258' having a larger capacity, such as a capacity of e.g. 50 km to e.g. 400 km travels is included instead of the battery 258 since the vehicle 150' travels along the guideway 50" under its own power. As described above with reference to fig. 7A, the control and propulsion system 250' analogously automatically controls steering and acceleration/deceleration of the vehicle 150' during travel along the guideway 150' based on distance information received from the distance sensors 206' and 208' as well as distance information received from the front distance sensor 274. Also, as described above further signals are received by the CPU 272 as instructions from the drive lane mapping device 266, however the vehicle 150', especially while running on the multi lane guideway 50" as shown in fig. 6E, may utilize further instructions which are not applicable to the vehicle 150. These further instructions may include instructions related to overtaking and lane changing.

While running on the single lane guideway 50 as shown in fig. 6D, the drive lane mapping device 266 issues instructions to the CPU 272 of the vehicle 150' declaring that change of lane is forbidden However, once the vehicle 150' has entered the multi lane guideway 50", instructions permitting or initiating lane change may be sent to the CPU 272 from drive lane mapping device 266 provided that specific conditions are present. These conditions may be the activation of additional distance sensors at the rear or corners of the vehicle 150' (not shown). Signals from the additional sensors may serve as triggers for triggering instructions in the drive lane mapping device 266. One possible situation where a lane change instruction may be sent to the CPU 272 is when the vehicle 150' rapidly approaches a stationary object, for example a malfunctioning vehicle, further down the guideway 50". The front distance sensor 274 reports a decreasing distance to the object which on the single lane guideway 50 would result in a signal from the CPU 272 to the car control 252 to reduce the rotational speed of the hub motors 254 and 256. However, as location data provided by the GPS receiver 270 to the drive lane mapping device 266 upon entering the multi lane guideway 50" has triggered an instruction from the drive lane mapping device 266 to the CPU 272 allowing lane changes, the vehicle 150' may change lane, either manually by the human driver whereby additional instructions, for example instructions triggered by human driver as he activates additional sensors or turns his head to check that the neighboring lane is free, or automatically provided that additional sensors triggers instructions in the drive lane mapping device 266 initiating the lane change

Fig. 8 shows elevated transport system 10' includes the guideway 50 assembled from a plurality of guideway modules, one of which is designated the reference numeral 50a, each supporting a power and control rail module, one of which is designated the reference numeral 100a, the power and control rail modules 100a making up the power and control rail 100. Support pillars, one of which is designated the reference numeral 300 elevates the guideway 50 and may furthermore include storage batteries, one of which is designated the reference numeral 302 for storing electrical energy distributed to the power and control rail 100 as vehicles decelerate. Electricity stored in storage batteries 302 may then be used to power other vehicles which accelerate. One example is when vehicles go downhill and need to brake to not exceed a speed limit. By using the electric motors as generators the vehicles can brake while distributing electric energy back to the power and control rail 100 and to storage batteries 302. The stored energy may then be used by vehicles going in the other direction i.e. uphill. Thus, the consumption of electrical energy by transport system 10 or 10' may be reduced.

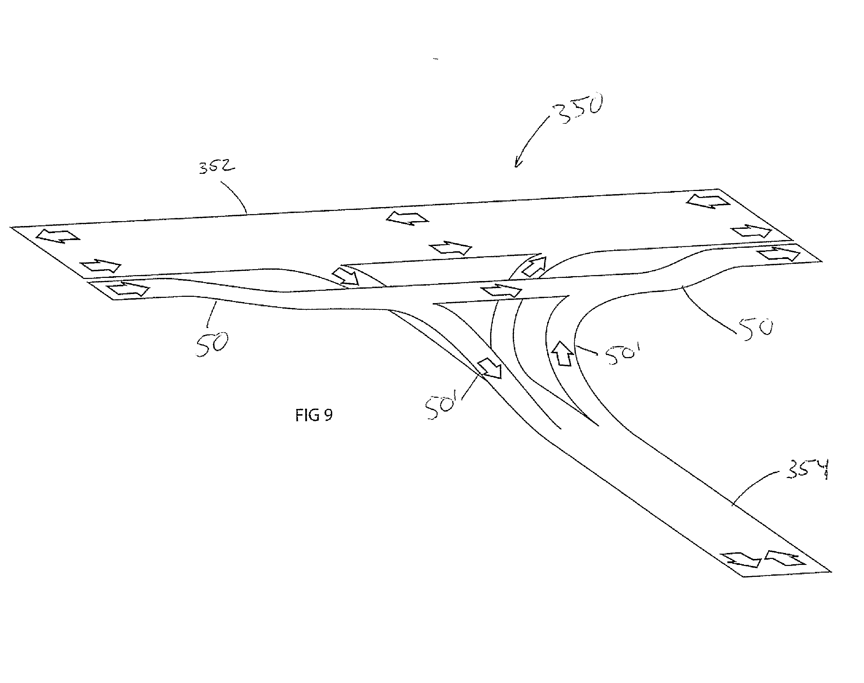

Fig. 9 shows a traffic junction 350 where the guideway 50 have been constructed adjacent an ordinary road 352. The guideway ramps 50' are provided for entering or exiting the guideway 50 from an ordinary road 354.

### List of parts with reference to the figures

| |
|---|
| 10. Transport system |
| 10'. Elevated transport system |
| 50. Guideway |
| 50'. Guideway ramp |
| 50". Guideway (alternative embodiment) |
| 50a. Guideway module |
| 52. Top surface |
| 54. First side |
| 56. Second side |
| 56' Second side (alternative embodiment) |
| 58. Bottom |
| 60. First shoulder |
| 62. Second shoulder |
| 64. First bevel |
| 66. Second bevel |
| 100. Power and control rail |
| 100'. Power and control rail (alternative embodiment) |
| 100". Power and control rail (alternative embodiment) |
| 100'''. Power and control rail (alternative embodiment) |
| 100a. Power and control rail module |
| 102. Slot |
| 104. First electric strip |
| 106. Second electric strip |
| 108. Proximal control surface |
| 110. Distal control surface |
| 112. Enclosure |
| 114. Slit |
| 116. Strut |
| 116'. Strut (alternative embodiment) |
| 118. Inner wall |
| 108"'. First control rail |
| 110"'. Second control rail |
| 120'. First distance |
| 122'. Second distance |
| 150. Vehicle |
| 150'. Vehicle (alternative embodiment) |
| 150'^{a}. Vehicle |
| 150'^{b}. Vehicle |
| 150'^{c}. Vehicle |
| 150". Vehicle (alternative embodiment) |
| 150'''. Vehicle (alternative embodiment) |
| 152. Body |
| 154. Windshield |
| 156. Side window |
| 158. Road wheel |
| 160. Tire |
| 162. Front bumper |
| 164. Rear bumper |
| 166. Headlight |
| 168. Front sensor area |
| 200. Pantograph |
| 200'. Pantograph (alternative embodiment) |
| 200". Pantograph (alternative embodiment) |
| 202. Arm |
| 204. Body |
| 206. Proximal distance sensor |
| 208. Distal distance sensor |
| 206'. First distance sensor |
| 208'. Second distance sensor |
| 210. First contact |
| 212. Second contact |
| 250. Propulsion and control system |
| 250' Propulsion and control system (alternative embodiment) |
| 252. Car control |
| 254. Rear hub motor |
| 256. Front hub motor |
| 258. Battery |
| 258'. Battery (alternative embodiment) |
| 260. Accelerator |
| 262. Brake pedal |
| 264. Steering wheel |
| 266. Drive lane mapping device |
| 268. GPS/Radio antenna |
| 270. GPS receiver |
| 272. CPU |
| 274. Front distance sensor |
| 276. CPU I/O Interpreter |
| 278. Touch screen |
| 280. Mobile phone |
| 282 Docking station |
| 300. Support pillar |
| 302. Storage battery |
| 350. Junction |
| 352. Ordinary road |
| 354. Ordinary road |

## Claims

1. A transport system including a guideway and one or more vehicles:
i) said guideway having
a top surface for allowing said one or more vehicles to drive on said guideway,
a number of position indicating elements positioned along said guideway and defining a drive lane on said top surface
ii) each of said one or more vehicles having
a body,
two pairs of rotatable wheels supported rotatably by said body,
an electrical power source included in said body,
a steering motor supported by said body, for steering one of said pair of wheels by the actuation of said steering motor through the supply of electrical power from said electrical power source to said steering motor,
a positioning detector supported by said body and cooperating with said position indicating elements for determining a first distance from said vehicle to said position indicating elements,
a distance detector positioned at the front end of said body and receiving electrical power from said electrical power source, for determining a second distance to an obstacle, in particular a further vehicle driving on said guideway,
a drive motor system supported by said body and connected to at least one pair of said rotatable wheels constituting a pair of drive wheels for causing said vehicle to drive by supplying energy to said drive motor system,
a brake system including a brake element located in or at each of said wheels of said two pair of wheels, and
a CPU housed within said body, receiving electrical power from said electrical power source, and further communicating with said positioning detector, said distance detector and said steering motor and receiving information from said positioning detector for causing the actuation of said steering motor and generating, in case a deviation of said vehicle in relation to said drive lane is detected, a lateral repositioning of said vehicle in relation to said drive lane for maintaining said first distance from said vehicle to said position indicating elements and, receiving information from said distance detector for causing the interruption of the supply of energy to said drive motor system and/or causing actuation of said brake system for decelerating said vehicle and maintaining a distance to said further vehicle identical to or exceeding said second distance.

2. The transport system according claim 1, said vehicle further having
a position device housed within said body and receiving electrical power from said electrical power source for determining the distance driven by said vehicle on said guideway, and
a drive lane mapping device housed within said body and receiving electrical power from said electrical power source and communicating with said position device and said CPU, and receiving information from said position device for causing said CPU to actuate said steering motor and generate a lateral repositioning of said vehicle in relation to said drive lane.

3. The transport system according to claim 2, said drive lane mapping device further including instructions for causing said CPU to interrupt the supply of energy to said drive motor system.

4. The transport system according to claim 1-3, said drive motor system being and electrical drive motor system, and energy supplied to said drive motor system being electrical energy.

5. The transport system according to claims 1, said guideway further including a conducting structure to supply electrical energy to said vehicle.

6. The transport system according to claim 1-5, said vehicle further including a steering wheel, an accelerator and a brake pedal to enable said vehicle to be driven manually by a human driver outside of said guideway.

7. A method of driving a vehicle on a guideway comprising the steps of:
i) providing said guideway having
a top surface for allowing said said vehicle to drive on said guideway,
a number of position indicating elements positioned along said guideway and defining a drive lane on said top surface
ii) providing said vehicles having
a body,
two pairs of rotatable wheels supported rotatably by said body,
an electrical power source included in said body,
a steering motor supported by said body, for steering one of said pair of wheels by the actuation of said steering motor through the supply of electrical power from said electrical power source to said steering motor,
a positioning detector supported by said body and cooperating with said position indicating elements for determining a first distance from said vehicle to said position indicating elements,
a distance detector positioned at the front end of said body and receiving electrical power from said electrical power source, for determining a second distance to an obstacle, in particular a further vehicle driving on said guideway,
a drive motor system supported by said body and connected to at least one pair of said rotatable wheels constituting a pair of drive wheels for causing said vehicle to drive by supplying energy to said drive motor system,
a brake system including a brake element located in or at each of said wheels of said two pair of wheels, and
a CPU housed within said body, receiving electrical power from said electrical power source, and further communicating with said positioning detector,
receiving information from said positioning detector and forward communication said information to said CPU,
causing the actuation of said steering motor controlled by said CPU in case a deviation of said vehicle in relation to said drive lane is detected by a lateral repositioning of said vehicle in relation to said drive lane for maintaining said first distance from said vehicle to said position indicating elements and
receiving information from said distance detector and communicating said information to said CPU,
causing the interruption of the supply of energy to said drive motor system and/or causing actuation of said brake system controlled by said CPU for decelerating said vehicle and maintaining a distance to said further vehicle identical to or exceeding said second distance.

8. The method according to claim 7:
providing a position device housed within said body and receiving electrical power from said electrical power source for determining the distance driven by said vehicle on said guideway,
providing a drive lane mapping device housed within said body and receiving electrical power from said electrical power source and communicating with said position device and said CPU, and
receiving information from said position device for causing said CPU to actuate said steering motor and generate a lateral repositioning of said vehicle in relation to said drive lane.

9. The method according to any of the claim 7-8 further fulfilling the features of the transport system according to any of the claims 3-6.

10. A vehicle for use in the transports system according to any of the claims 1-6 and/or for use in the method according to any of the claims 7-9, said vehicle having:
a body,
two pairs of rotatable wheels supported rotatably by said body,
an electrical power source included in said body,
a steering motor supported by said body, for steering one of said pair of wheels by the actuation of said steering motor through the supply of electrical power from said electrical power source to said steering motor,
a positioning detector supported by said body and cooperating with said position indicating elements for determining a first distance from said vehicle to said position indicating elements,
a distance detector positioned at the front end of said body and receiving electrical power from said electrical power source, for determining a second distance to an obstacle, in particular a further vehicle driving on said guideway,
a drive motor system supported by said body and connected to at least one pair of said rotatable wheels constituting a pair of drive wheels for causing said vehicle to drive by supplying energy to said drive motor system,
a brake system including a brake element located in or at each of said wheels of said two pair of wheels, and
a CPU housed within said body, receiving electrical power from said electrical power source, and further communicating with said positioning detector, said distance detector and said steering motor and receiving information from said positioning detector for causing the actuation of said steering motor and generating, in case a deviation of said vehicle in relation to said drive lane is detected, a lateral repositioning of said vehicle in relation to said drive lane for maintaining said first distance from said vehicle to said position indicating elements and, receiving information from said distance detector for causing the interruption of the supply of energy to said drive motor system and/or causing actuation of said brake system for decelerating said vehicle and maintaining a distance to said further vehicle identical to or exceeding said second distance.
